# EUROPEAN PATENT APPLICATION

(11) **EP 3 187 844 A1**
(43) Date of publication of application: **05.07.2017**
(21) Application number: 16460001.7
(22) Date of filing: 14.01.2016
(51) Int. Cl.: G01J 3/04, G01J 3/18, G01J 3/36, G01J 3/443, G01J 3/02

(54) **A SPECTROMETER WITH THE IMPROVED CZERNY-TURNER MONOCHROMATOR**

(30) Priority: 30.12.2015 PL 41566715
(71) Applicant: Instytut Optyki Stosowanej, 03-805 Warszawa (PL)
(72) Inventor: Wiklinski, Piotr, 05-230 Kobylka (PL); Kryszczynski, Tadeusz, 01-034 Warszawa (PL); Kozlowski, Tomasz, 00-179 Warszawa (PL); Ramsza, Andrzej, 03-161 Warszawa (PL)
(74) Representative: Woznicki, Jerzy

(57) **Abstract**

The spectrometer comprises an entrance slit (1), a collimator mirror (2), a diffraction grating (3), a focusing mirror (4), an exit slit (5), and two additional exit slits (6, 7) behind which there are separate photodetectors (8, 9). Both additional exit slits (6, 7) are located symmetrically in relation to the first exit slit (5) which constitutes the nominal slit of the monochromator.

## Description

The invention pertains to a spectrometer with an improved Czerny-Turner monochromator used in emission spectrometry to study the radiation spectrum of samples and to measure the spectral characteristics of various radiation sources.

There are known optical monochromators with a diffraction element in the form of a flat grating with a specific number of lines per millimeter which defines the constant of the grating. The resolution of the monochromator depends on the number of the lines. In typical arrangements, the diffraction grating is illuminated by a parallel beam and the entrance slit is projected on the exit slit. Such arrangements include, among others, the Czerny-Turner monochromator with two separate concave mirrors and the Elbert monochromator with a single concave mirror.

The basic requirements that must be met by monochromators used in spectrometry include broad spectrum range and high spectral resolution. Both requirements are connected with the large angle of inclination of the diffraction element in relation to the incident beam, which has a negative impact on the optical efficiency of such arrangements. Therefore, in commonly known arrangements, the beam is split behind the exit slit. For this purpose, beam splitting elements or switchable mirror elements are used to direct the beam to a measurement system consisting of different detectors that correspond to different ranges of the spectrum. The disadvantage of such arrangement is reduced energy efficiency related to losses of light on additional optical elements, which has a negative impact on the results of measurements.

The aim of the invention is to build a spectrometer with an improved Czerny-Turner monochromator arrangement without the disadvantage present in the currently known monochromators.

A spectrometer with an improved Czerny-Turner spectrometer comprising an entrance slit, a collimator mirror, a diffraction grating, a focusing mirror, an exit slit, and photodetectors, according to the invention has two additional exit slits behind which there are separate photodetectors, whereby both additional exit slits are located symmetrically to the sides of the first exit slit which constitutes the nominal slit of the monochromator.

Preferably, the nominal slit is located at the point of the best focus of the nominal main beam.

Also preferably, each additional exit slit is located not more than 0.04 times the focal length of the monochromator from the position of the nominal slit.

By using two additional exit slits located symmetrically in relation to the entrance slit, the radiation beam is divided into two ranges without any losses compared to radiation bent on the diffraction grating. The first range corresponds to visible radiation (VIS), i.e. 300-900 nm, while the second range corresponds to ultraviolet radiation (UV), i.e. 165-300 nm. Behind the exit slits there are photodetectors that measure the signal in the specific sub-band simultaneously and independently of each other. The additional exit slits should be located at a distance from each other that does not reduce the resolution of the spectrometer and has no negative impact on the projection of the entrance slit by the optical system of the monochromator, namely not more than 0.04 times the focal length of the monochromator away from the nominal slit.

By using the first exit slit as the nominal slit, it is possible to correctly adjust the spectrometer. This slit is located at the same place as the exit slit in the classical arrangement of the Czerny-Turner monochromator.

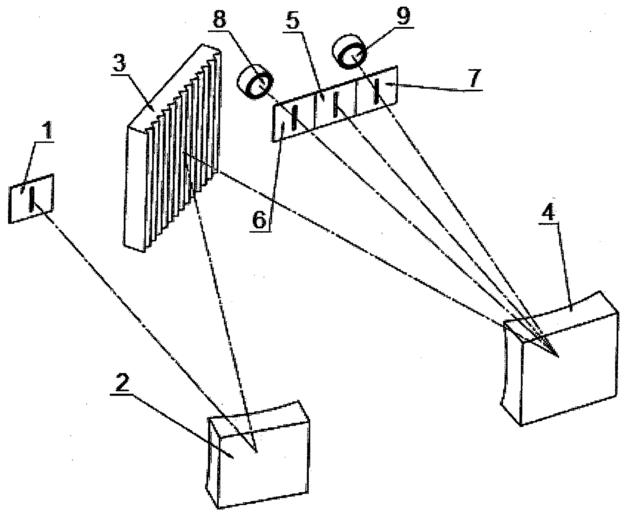

The subject of the invention is presented in the enclosed figure which shows a schematic drawing of a spectrometer with an improved Czerny-Turner monochromator.

The improved Czerny-Turner monochromator comprises an entrance slit 1, a collimator mirror 2, a diffraction grating 3, a focusing mirror 4, the first exit slit 5, and two additional exit slits 6, 7 behind which there are separate photodetectors 8, 9. Both additional exit slits 6, 7 are located symmetrically in relation to the first exit slit 5 which constitutes the nominal slit of the monochromator. The nominal slit enables correct adjustment of the spectrometer.

In the spectrometer according to the invention, the wavelength of light is measured simultaneously and independently for two ranges: VIS and UV. The simultaneous measurement in those two ranges takes place as a result of the use of identical spaced out additional exit slits 6, 7. Behind those slits, respectively, there are the two photodetectors 8 and 9 which measure the signal for each of the ranges. The photodetector 8 for the VIS range, located behind the first additional exit slit 6 for the VIS range, measures the radiation coming from the first row of the deflection of the incident beam striking the diffraction grating 3. The photodetector 9 for the UV range, located behind the additional exit slit 7 for the UV range, measures the signal from the second row of the deflection. The individual rows correspond to specific ranges of the radiation spectrum. In the case of the first range, VIS, the visible and the near infrared is measured, i.e. 300-900 nm. In the case of the second range, UV, the ultraviolet radiation is measured, i.e. 165-300 nm.

The improved arrangement of the monochromator made in the embodiment has an optical system of nominal focal length equal to 750 nm. Both the entrance slit 1 and the exit slits 5, 6, 7 are fixed slits that are 20 µm wide and 3 mm high. The dimensions of the active surface of the collimator mirror 2 are 54 x 54 mm and the dimensions of the active surface of the focusing mirror 4 are 100 x 54 mm. Moreover, a flat, directional diffraction grating 3 is used, with 1,800 lines per 1 mm.

The angle between the main beam of the incident beam striking the collimator mirror 2 and the beam reflected from the collimator mirror 2 is equal to 5°. In the case of the main beam striking and reflected by the focusing mirror 4, the angle is equal to 7°. The main beam striking the collimator mirror 2 and the main beam reflected from the focusing mirror 4 are parallel to each other. In the embodiment of the improved monochromator, the nominal slit is located at the point of the best focus of the nominal main beam. Both additional exit slits 6, 7, which constitute independent measurement channels, are located 19.6 mm away from the nominal slit. The two photodetectors 8 and 9 are located behind the exit slits 6 and 7, at a distance that allows maximum filling of their active surface with radiation.

The spectrometer according to the invention was made using a high-pass filter with nominal cut-off value equal to 300 nm. This way, the measurement range for visible light and near infrared (300-900 nm) is completely free of any influence of interferences coming from the second deflection row.

## Claims

1. A spectrometer with an improved Czerny-Turner monochromator comprising an entrance slit, a collimator mirror, a diffraction grating, a focusing mirror, an exit slit, and photodetectors, **characterized in that** it has two additional exit slits (6, 7) behind which there are separate photodetectors (8, 9), whereby both additional exit slits (6, 7) are located symmetrically to the sides of the first exit slit (5) which constitutes the nominal slit of the monochromator.

2. The spectrometer according to claim 1, wherein the nominal slit is located at the point of the best focus of the nominal main beam.

3. The spectrometer according to claim 1, wherein each additional exit slit (6, 7) is located not more than 0.04 times the focal length of the monochromator from the position of the nominal slit.
